# EUROPEAN PATENT SPECIFICATION

(11) **EP 4 520 597 B1**
(45) Date of publication and mention of the grant of the patent: **05.11.2025**
(21) Application number: 23196142.6
(22) Date of filing: 08.09.2023
(51) Int. Cl.: B60R 9/10, B60R 11/04

(54) **CONNECTED BIKE RACK**
VERBUNDENER FAHRRADTRÄGER
PORTE-VÉLO CONNECTÉ

(43) Date of publication of application: 12.03.2025
(73) Proprietor: Wuhan Lotus Cars Co., Ltd., Wuhan, Hubei (CN)
(72) Inventor: Khan, Bilal, 65462 Ginsheim-Gustavsburg (DE); Pätzold, Anna, 55131 Mainz (DE)
(74) Representative: Studio Torta S.p.A.

(56) References cited:
- EP-A1- 4 123 262
- DE-A1- 102021 004 633
- US-A1- 2020 055 459
- US-B2- 11 608 002

## Description

The present application relates to a method of operating a vehicle system of a vehicle in connection with a determined presence of at least one bicycle accommodated in or on a bicycle rack. The present application further relates to a respective computer program product, a vehicle system and a vehicle.

### BACKGROUND

Many vehicles are equipped with computing facilities and environment sensors of various types. Typical environment sensors of vehicles include cameras, radar sensors, lidar sensors, ultra-sound sensors, and the like.

In DE 10 2021 004 633 A1, it is proposed to use image data from a rearward camera of a vehicle to determine a correct mounting of a bicycle rack attached to the rear of the vehicle.

There is a need for improved operation of a vehicle system.

US 11608002 B2 discloses systems, methods, tangible non-transitory computer-readable media, and devices associated with the operation of a vehicle are provided. For example, a receptacle system can determine states of a receptacle of a vehicle. Further, the states of the receptacle can be associated with accommodation of objects by the receptacle. The receptacle system can receive object data that includes information associated with accommodation of the objects by the receptacle. The receptacle system can also determine operations associated with the receptacle based at least in part on the object data and the states of the receptacle. Furthermore, the receptacle system can generate control signals to perform the operations associated with the receptacle which can include transporting objects in the receptacle, charging objects in the receptacle, extending the receptacle, or retracting the receptacle.

EP 4123262 A1 discloses a method of assisting a driver of an automobile (10) characterized in that, if a bicycle (12) is detected to be carried by the automobile (10), a bike trail is recommended to the driver.

DE 102021004633 A1 discloses a method for monitoring the correct installation of a bicycle carrier (3) that can be arranged at the rear of a vehicle (2) by means of a trailer coupling (1), wherein at least one camera image (5) generated by a camera (4) arranged at the rear and capturing a rear surrounding area of the vehicle (2) is evaluated. The method according to the invention is characterized in that, in order to detect whether the bicycle carrier (3) is correctly locked onto the trailer coupling (1). an indicator feature is searched for in the camera image (5) and its characteristics are evaluated.

US 2020/055459 A1 discloses a vehicle system includes a bicycle lock and a processor. The processor is programmed to receive a bicycle slot reservation message, assign the bicycle slot reservation message to a bicycle slot of an autonomous bus, command the bicycle lock associated with the bicycle slot to an unlocked position, detect a bicycle placed in the bicycle slot, and command the bicycle lock to a locked position.

### SUMMARY OF THE INVENTION

Accordingly, there is provided a method according to claim 1, a computer program product according to claim 10, a vehicle system according to claim 11, and a vehicle according to claim 12.

According to a first aspect, a method of operating a vehicle system of a vehicle is provided. The method comprises determining, by means of the vehicle system, the presence of at least one bicycle accommodated in or on a bicycle rack of the vehicle, wherein the presence of the at least one bicycle is determined based at least partially on one or more sensor signals received from one or more environment sensors of the vehicle and/or from a weight sensor of the vehicle. The method further comprises controlling, by means of the vehicle system and based at least partially on the determined presence of the at least one bicycle, at least one function of the vehicle.

The provided method enables that one or more functions of a vehicle can be automatically controlled, in particular adapted, in accordance with a determined presence of one or more bicycles on a bicycle rack of the vehicle. The method benefits from the observation that the presence of one or more bicycles on a bicycle rack of a vehicle often correlate with particular preferences, interests and/or needs of a user of the vehicle with respect to vehicle functions. In addition, by the use of environment sensor data or weight sensor data, in particular from a camera, such as a rearward camera, of the vehicle and/or a weight sensor of a tow bar of the vehicle on which the bicycle rack is mounted, it is possible to implement the method using a sensor arrangement which is found in many vehicles. This allows for an easy implementation, with a low demand of additional material and costs. Determining the presence of at least one bicycle accommodated in or on a bicycle rack based on environment sensor data can be achieved by applying an object recognition algorithm on the environment sensor data, in particular on camera data. In addition, or as an alternative, determining the presence of at least one bicycle accommodated in or on a bicycle rack can be achieved by combining various sensor data, such as weight sensor data indicating that a load is applied to a tow bar, on which the bicycle rack is mounted, and park assist sensor data indicating the absence of a trailer coupled to the tow bar, and the like.

It is understood that in the sense of this application and under consideration of a fluent transition between bicycles, e-bikes and motorcycles, the term bicycle as used herein can comprise all bikes such as classic human-powered bicycles (including pedal cycles and bush-bikes), electric bicycles, motorized bicycles, pedelecs or EPACs (electronically power assisted cycle), scooters, and/or electric motorcycles and scooters.

The one or more environment sensors may comprise a camera, in particular a rearward camera, and/or a park assist sensor.

The method further comprises determining, by means of the vehicle system, a type of the at least one bicycle. Controlling the at least one function may be further performed based on the determined type of the at least one bicycle.

The use of environment sensor data and/or weight sensor data facilitates determining a type of a bicycle accommodated in the bicycle rack. Determining the bicycle type is achievable, in particular, by applying an object recognition algorithm on camera data which are obtained from one or more cameras of the vehicle. Knowledge of a bicycle type enables improved, in particular more meaningful, control of the at least one function of the vehicle, in particular, in accordance with a likely need or a likely interest of one or more passengers of the vehicle with respect to the particular type(s) of the bicycle(s). In this regard, the method benefits from the observation that many bicycle types have indicative features which are sensorily detectable, such as different weights and/or different structural and/or visual contours, which facilitate determining a bicycle type captured in the sensor data. The method further benefits from the observation that the use of a particular bicycle type often correlates with particular preferences, particular interests and/or particular needs of a user of the vehicle with respect to vehicle functions.

Concerning a possible use of object recognition applied to the environment sensor data of the vehicle, the method also benefits from computing resources which are found in many vehicle systems, in particular in vehicles with a capability for autonomous driving. A suitable object recognition algorithm can be effectively trained in connection with a machine learning process, for analyzing the environment sensor data with respect to different types of bicycles, such as camera data including portions of frames of different bicycle types, and the like.

The type of the at least one bicycle may be determined from a group of bicycle types including at least one of competition racing bike, racing bike, mountain bike, conventional bike, trekking bike, electric bike, children's walking bike and/or children's bike.

The one or more sensor signals comprise one or more camera signals received from a camera, in particular a rearward camera, of the vehicle. Determining the type of the at least one bicycle may be performed at least partially using an object recognition algorithm which is applied to image data encoded in the one or more camera signals. In addition, or as an alternative, the one or more sensor signals comprise one or more weight sensor signals received from a weight sensor of the vehicle. In this case, determining the type of the at least one bicycle may be performed at least partially based on a stored mapping between a plurality of bicycle types and a plurality of weight ranges.

Controlling the at least one function may comprise providing a recommendation functionality and/or a checklist functionality to a user of the vehicle system via a user interface. The recommendation functionality may include a recommendation for at least one bike route in accordance with the determined type of the at least one bicycle. The checklist functionality may include a checklist for at least one requirement depending at least on the determined type of the at least one bicycle.

The method may further comprise determining, by means of the vehicle system, a number of passengers in the vehicle and an age of each passenger. Controlling the at least one function may be further performed based on the determined number of passengers in the vehicle and the determined age of each passenger.

The at least one bike route may be determined based at least partially on one or more of a determined match between the determined number of passengers in the vehicle and a determined number of bicycles accommodated in the bicycle rack, a determined match between the determined age of each passenger and the determined type of each bicycle accommodated in the bicycle rack, and/or a location on a vehicle route, in particular a destination of a vehicle route, which has been pre-set in a navigation functionality of the vehicle system.

The method may further comprise monitoring, by means of the vehicle system, the presence of the at least one bicycle accommodated in the bicycle rack using the one or more environment sensors and/or the weight sensor. Controlling the at least one function comprises, when the monitoring indicates a change of the presence of the at least one bicycle while an alert condition of the vehicle system is fulfilled, outputting, by means of the vehicle system, at least one alert signal indicative of the change. The alert condition may comprise a determined absence of a vehicle key of the vehicle from a proximity of the vehicle. A change of the presence of the at least one bicycle may include a removal of the at least one bicycle from the bicycle rack. In addition, or as an alternative, a change of the presence of the at least one bicycle may include a removal of at least a part of the at least one bicycle from the bicycle rack.

In addition, the method may further comprise receiving, by means of the vehicle system and via a communication unit of the vehicle system, a status request. Controlling the at least one function may comprise, in response to receiving the status request, obtaining, by means of the vehicle system and from the one or more environment sensors and/or from the weight sensor, one or more sensor signals indicative of an accommodation status of the bicycle rack, and outputting, by means of the vehicle system and via the communication unit, at least one status response indicative of the accommodation status of the bicycle rack.

According to another aspect, a computer program product is provided. The computer program product comprises portions of program code which, when executed by a processor of a vehicle system of a vehicle, configure the vehicle system to perform the method as presently provided.

According to another aspect, a vehicle system is provided. The vehicle system comprises a processor and a storage device operatively coupled to the processor, wherein the storage device comprises portions of program code which, when executed by the processor, cause the vehicle system to perform the method as presently provided.

According to another aspect, a vehicle is provided. The vehicle comprises a vehicle system as presently provided.

### BRIEF DESCRIPTION OF THE FIGURES

Further details, advantages and objectives of the invention become apparent from the drawings and the detailed description. There is shown in the drawings:
Fig. 1 a vehicle with a vehicle system according to an example;
Fig. 2 a flow diagram of a method of operating a vehicle system according to an example;
Fig. 3 a control unit for a vehicle according to an example;
Fig. 4 a flow diagram of a method of operating a vehicle system according to another example.

### DETAILED DESCRIPTIO

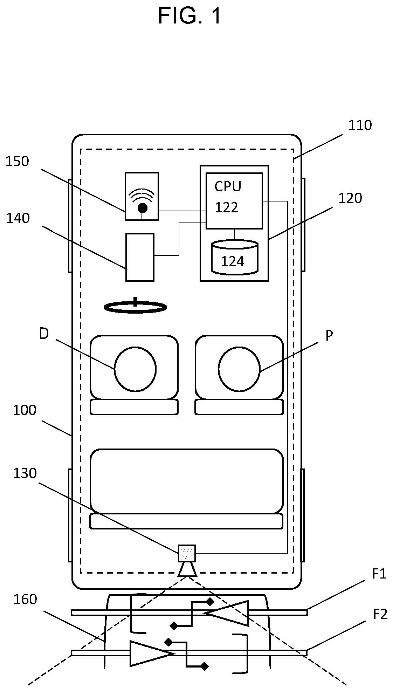

Fig. 1 shows schematically and exemplarily a vehicle 100. The vehicle 100 comprises a vehicle system 110. The vehicle system 110 includes a control unit 120, which comprises a processor 122 and a data storage device 124 operatively connected to the processor 122. The vehicle system 110 further comprises one or more environment sensors 130 adapted to detect an environment, including objects within an environment, of the vehicle 100. The vehicle system 110 further comprises at least one controllable function 140.

In the shown example, the vehicle system 110 also comprises a communication unit 150 adapted to receive communication signals, for example, radio signals, over a communication network to which the vehicle system 110 is connected. The environment sensor 130, the function 140, and the communication unit 150 are operatively connected to the processor 122 of the control unit 120.

The vehicle 100 further comprises a bicycle rack 160. In the shown example, the bicycle rack 160 is arranged at the rear of the vehicle 100. In the shown situation, two bicycles F1, F2 are accommodated in the bicycle rack 160. Furthermore, as indicated in Fig. 1 by the diagonal dashed lines, the environment sensor 130 and the bicycle rack 160 are arranged with respect to each other in such way that the presence of a bicycle, for example, bicycles F1, F2, in the bicycle rack 160 will be sensorily captured by the environment sensor 130.

In the shown example, the environment sensor 130 comprises a rearward camera. Moreover, the bicycle rack 160 is arranged with respect to the environment sensor 130 at the rear of the vehicle 100 in such way that at least a portion of each of the bicycles F1, F2 is within a field of view of the rearward camera, as indicated in Fig. 1 by the dashed lines. In other examples, other arrangements of the bicycle rack 160, of the environment sensor 130, and/or other or additional types of environment sensors 130 are used. In examples in which the bicycle rack 160 is mounted on a tow bar (not shown) of the vehicle 100, a weight sensor (not shown) of the tow bar of the vehicle 100 can be used in addition, or as an alternative, to the one or more environment sensors 130 for detecting the presence of one or more bicycles F1, F2 in the bicycle rack 160.

The environment sensor 130 outputs environment sensor data to the control unit 120. In the shown example, the environment sensor data includes rearward camera data.

The control unit 120 determines the presence of the bicycles F1, F2 accommodated in the bicycle rack 160 of the vehicle 100, as it is indicated by the camera data. Determining the presence of the bicycles F1, F2 is performed, for example, by applying an object recognition algorithm on some or all of the camera data obtained from the rearward camera 130. In other examples, the presence of the bicycles F1, F2 accommodated in the bicycle rack 160 of the vehicle 100 is determined by the control unit 120 based on other or additional sensor data, for example, based on a detected weight which is applied to a tow bar of the vehicle 100 on which the bicycle rack 160 is mounted and which is detected by means of a weight sensor of the tow bar. A detected weight is used in some examples for checking a plausibility of a result obtained by the analysis of the environment sensor data. In other examples, a detected weight is combined with environment sensor data, such as with park assist sensor data, to determine the presence of the bicycles F1, F2. A presence of the bicycles F1, F2 is determined, for example, when the detected weight indicates a load in agreement with a weight of the empty bicycle rack 160 plus an additional weight in a range corresponding to a number of bicycles which can be accommodated in the bicycle rack 160, and when the park assist sensor data does not simultaneously indicate the presence of an extended object, such as a trailer, behind the vehicle 100. In other examples, the presence of the bicycles F1, F2 in the bicycle rack 160 of the vehicle 100 is determined by the control unit 120 based on additional and/or other environment sensor data and/or weight sensor data than described above.

When the control unit 120 has determined the presence of the bicycles F1, F2, it controls the at least one function 140 in accordance with the determined presence of the bicycles F1, F2.

In some examples, the function 140 comprises a recommendation functionality, which, in some examples, is integrated in a navigation functionality of the vehicle system 110. The presence of the bicycles F1, F2 in the bicycle rack 160 indicates an increased probability that a user of the vehicle 100, such as the driver D and/or one or more other passengers P, have an interest in bicycle routes, for example, attractive bicycle routes or bicycle routes to points of interest which lie in a vicinity of a current position of the vehicle 100, in a vicinity of a pre-set navigation route of the vehicle 100, etc. Accordingly, the control unit 120 operates the recommendation functionality in such a way that a recommendation of one or more such bicycle routes is provided, for example, via a user interface of a navigation functionality of the vehicle system 110.

In another example, the at least one function 140 includes a bike theft alert function. The bike theft alert function uses a monitoring functionality by which the vehicle system 110 monitors the presence of the bicycles F1, F2 in the bicycle rack 160, for example, by obtaining sensor data from the environment sensor 130 and/or from a weight sensor, continuously or at regular intervals, and analyzing successive sensor data with respect to changes in the presence of the bicycles F1, F2. When a change in the presence of the bicycles F1, F2 is determined, the bike theft alert function issues an alert, for example, an acoustic alert via a siren of the vehicle system 110, a wireless alert signal transmitted via the communication unit 150 to a mobile device of a user D, P of the vehicle 100, or the like. A change in the presence of the bicycles F1, F2 includes in some examples a removal of one or more of the bicycles F1, F2 from the bicycle rack 160. In other examples, a change in the presence of the bicycles F1, F2 includes a removal of at least a part of one or more of the bicycles F1, F2, such as a removal of a battery of an electric bicycle, etc., from the bicycle rack 160.

The control unit 120 controls in some examples the bike theft alert function in such way that the bike theft alert function is automatically activated when it is determined that a user D, P of the vehicle 100 is currently not in a proximity of the vehicle 100. Absence of a user D, P of the vehicle 100 from the proximity of the vehicle 100 is determined, for example, based on failure of the vehicle system 110 to receive a radio signal which is broadcast by a vehicle key of the vehicle 100.

In some examples, the control unit 120 additionally determines a type of each of the bicycles F1, F2.

Determining a type of each of the bicycles F1, F2 is performed in some examples by applying an object recognition algorithm to the sensor data obtained from the rearward camera 130. The object recognition algorithm is trained to identify each of a plurality of different types of bicycles based on portions, such as portions of the frame, of one or more bicycles which may be captured in the environment sensor data. In the captured portions of the one or more bicycles, the object recognition algorithm identifies one or more particular features which are indicative of a respective bicycle type.

The plurality of bicycle types includes one or more of the following types: competition racing bike, racing bike, mountain bike, conventional bike, tracking bike, electric bike, children's walking bike and/or children's bike. Indicative features of one or more of the aforesaid types include, for example, a frame size, a frame geometry, a thickness of frame tubes, a thickness of tires, and the like.

Furthermore, in some examples, determining a type of each of the bicycles F1, F2 is additionally, or alternatively, performed based on weight sensor data indicating a weight of the bicycles F1, F2. For this purpose, the data storage device 124 stores in some examples a mapping between the plurality of bicycle types and corresponding weight ranges. As an example, one or more of the aforesaid bicycle types are mapped to the following weight ranges: competition racing bike is mapped to a range from 6.8 to 7.5 kg; racing bike is mapped to a range from 8 to 11 kg; mountain bike is mapped to a range from 9.5 to 30 kg; conventional bike is mapped to a range from 10 to 15 kg; trekking bike is mapped to a range from 13 to 16 kg; electric bike is mapped to a range from 17 to 30 kg; children's walking bike is mapped to about 3.5 kg; and, children's bike is mapped to about 8 kg. In some examples, the detected weight of the bicycles F1, F2 in combination with the mapping is used for plausibility checking a type of the bicycles F1, F2 which has been determined based on the environment sensor data.

In some of these examples, the control unit 120 is further adapted to control the at least one function 140 in accordance with the determined type of each of the bicycles F1, F2. Referring to the above example of a recommendation functionality integrated into a navigation functionality, the control unit 120 controls the recommendation functionality in such manner that a recommended bike route or a recommended point of interest is selected based on the determined types of the bicycles F1, F2. For example, if determining the bicycle types indicates that all bicycles F1, F2 are of the mountain bike type, the recommendation functionality outputs a recommendation for a mountain bike route. In another example, when it is determined that one of the bicycles F1, F2 is of the children's bike type, bicycle routes selected for output are restricted to light or short routes, routes on even terrain, etc.

In another example, the at least one function 140 includes a checklist functionality which outputs a checklist to the user D, P of the vehicle 100 via a user interface of the vehicle system 110. The output checklist is selected based on the determined type of each of the bicycles F1, F2. For example, when one or more of the bicycles F1, F2 is determined to be of the electric bike type, the checklist functionality outputs a checklist containing requirements in connection with the use of an electric bike, for example, at a current location such as a country in which the vehicle 100 is presently located, in accordance with national requirements, etc. The checklist functionality includes in this case the output of information to the user D, P indicating an obligation to wear a helmet when using an electric bicycle at the present location of the vehicle 100, for example. In other examples the checklist functionality provides a checklist to the user D, P indicating an expected need of food, clothing, or the like during a bicycle trip in accordance with one or more bicycle routes presently recommended by the recommendation functionality, based on the determined bicycle types.

In some examples, the control unit 120 further determines a number of passengers D, P in the vehicle 100. Determining the number of passengers D, P is performed, for example, based on sensor data received from one or more occupancy sensors (not shown) of the vehicle 100, by analyzing camera data obtained from one or more cameras that capture an interior of the vehicle 100, etc. In these examples, the control unit 120 is further adapted to control the at least one function 140 based on the determined number of passengers D, P. For example, when controlling the at least one function 140, the control unit 120 checks whether the number of bicycles F1, F2 in the bicycle rack 160 matches the number of passengers D, P in the vehicle 100. When it is found that the number of bicycles F1, F2 does not match the number of passengers D, P in the vehicle 100, the control unit 120 determines in some examples a reduced probability that a current trip of the vehicle 100 is motivated by a present interest of the passengers D, P to do a bicycle tour. Information which is output by a navigation functionality of the vehicle 100 is then adapted accordingly. In another example, a recommendation for a bike route which is output via the navigation functionality can be selected based on the determined number of passengers D, P in the vehicle 100, for example, according to a suitability of the bike route for groups of cyclists, etc.

In some examples, the control unit 120 further determines an age of each passenger D, P in the vehicle 100. Determining the age of each passenger D, P is performed, for example, by applying an image analysis algorithm to the camera data obtained via the one or more cameras capturing the interior of the vehicle 100. In these examples, the control unit 120 is further adapted to control the at least one function 140 in accordance with the determined age of each passenger D, P. For example, when it is determined that one of the bicycles F1, F2 is of the children's bike type and the number of passengers D, P in the vehicle 100 is smaller than the number of bicycles F1, F2 in the bicycle rack 160, and if each of the passengers D, P is of an age older than a child's age, a navigation functionality of the vehicle system 110 is controlled such that the selection of a recommended bike route is not subject to any restriction due to the presence of the children's bike type among the bicycles F1, F2, etc.

In some examples, the at least one function 140 include a status response function. In these examples, the control unit 120 is adapted to receive a status request message, which has been obtained via the control unit 150 and which indicates a user's request concerning the present accommodation status of the bicycle rack 160. Upon receiving the status request, the control unit 120 generates and outputs for transmission via the communication unit 150 a status response indicative of the accommodation status of the bicycle rack 160. For example, a user D, P may have left the vehicle 100, and the vehicle 100 may be out of sight of the user D, P. When the user intends to check the presence of the bicycles F1, F2 in the bicycle rack 160, he or she transmits, for example from a mobile device and via a mobile communication network, a status request which is transmitted to the vehicle system 110. The user then receives on his or her mobile device the status response from the vehicle system 110 indicating the present accommodation status of the bicycle rack 160. For this purpose, the status response includes, for example, an image captured by the rearward camera 130 which has been retrieved by the control unit 120 from the rearward camera 130 upon receiving the status request. In other examples, the status response includes other or additional information indicative of a present accommodation status of the bicycle rack 160.

Updated algorithm data for the object recognition algorithm can be provided to the vehicle system 110 via the communication unit 150, for example, by a service provider, who can transmit the updated algorithm data via a wireless communication network. The updated algorithm data is used by the processor 122 for updating the object recognition algorithm in accordance with the received updated data.

Updated algorithm data which is received by means of the communication unit 150 includes in some examples updated bicycle types. In this way, the vehicle system 110 can be dynamically adapted to changes, such as technical innovations, modifications and/or extensions, among the types of bicycles. In other examples, the updated algorithm data contains updated classifying data for analyzing the environment sensor data with respect to the different bicycle types. For example, improvements of a trained object recognition algorithm which result from continued training or new classifiers which have been found to enable more efficient or more reliable analysis of the environment sensor data can in this way be communicated to be used by the vehicle system 110. In this way, a maintenance and/or an improvement of a functionality of the vehicle system 110 is achievable in a wireless manner. In other examples, updating the vehicle system 110 is performed by wire, for example, at regular intervals, at a service provider's workshop.

Via the communication unit 150, updated cartographic information is also received in some examples. The updated cartographic information enables updating recommended bike routes, recommended points of interests, updated geographic information, including changes in geographically defined legal requirements, etc.

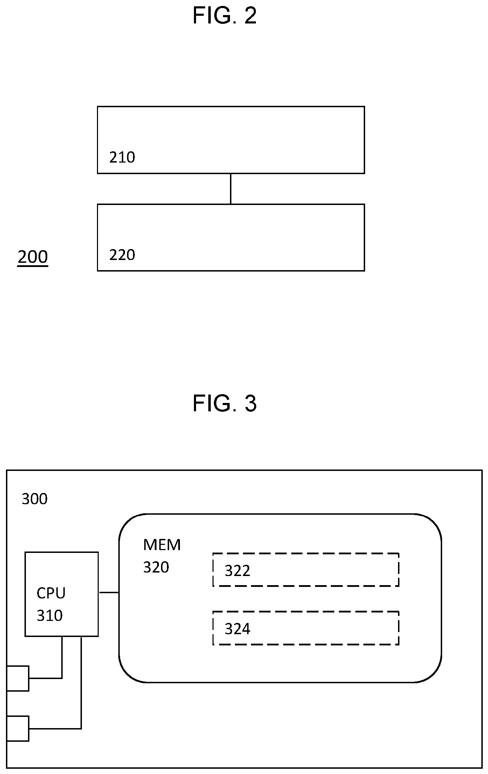

Fig. 2 shows a flow diagram of a method 200 of operating a vehicle system of a vehicle according to an example. The method 200 is executable, for example, by means of the vehicle system 110 shown in Fig. 1, as described above.

In particular, the method 200 comprises determining, by means of the vehicle system, the presence of at least one bicycle accommodated in a bicycle rack of the vehicle, wherein the presence of the at least one bicycle is determined based at least partially on one or more sensor signals received from one or more environment sensors of the vehicle and/or from a weight sensor of the vehicle, step 210. The method 200 further comprises controlling, by means of the vehicle system and based at least partially on the determined presence of the at least one bicycle, at least one function of the vehicle, step 210.

Fig. 3 shows schematically and exemplarily a control unit 300 for a vehicle system of a vehicle. The control unit 300 comprises a processor 310 which is operatively connected to a memory device 320. Furthermore, the control unit 300 is configured to receive and/or output data signals via one or more interfaces, as schematically indicated in Fig. 3.

The memory device 320 stores program code which is executable by means of the processor 310. The control unit 300 is implementable by way of an on-board control unit, such as the control unit 120 of the vehicle system 110 in Fig. 1. In other examples, the control unit 300 is implemented at least partially at one or more network nodes which are in network communication with an on-board vehicle system to receive data from the vehicle system and or output and transmit generated data towards the vehicle system via a communication network.

The memory device 320 stores program code which, when executed by means of the processor 310, configure the control unit 300 to perform operations according to any of the examples described above in connection with Fig. 1.

In particular, the memory device 320 stores program code which, by interaction with the processor 310, constitute a bicycle presence determining module 322 for determining the presence of at least one bicycle accommodated in a bicycle rack of the vehicle, wherein the presence of the at least one bicycle is determined based at least partially on one or more sensor signals received from one or more environment sensors of the vehicle and/or from a weight sensor of the vehicle. The memory device 320 further stores program code constituting a vehicle function controlling module 324 for controlling at least one function of the vehicle based at least partially on the determined presence of the at least one bicycle.

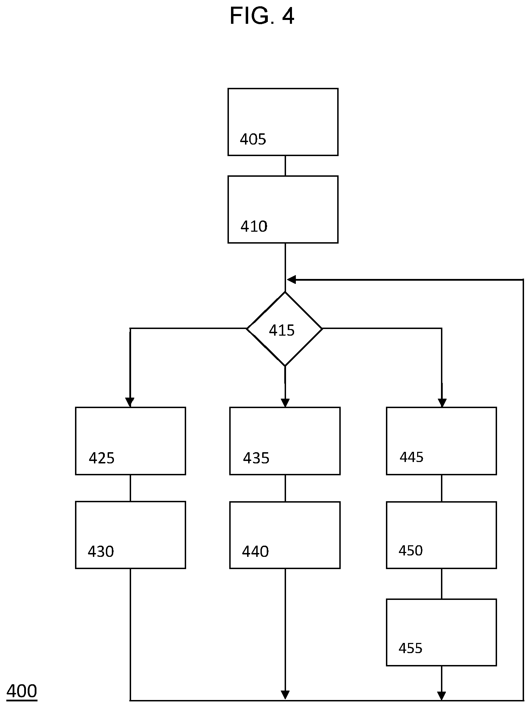

Fig. 4 shows a flow diagram of a method 400 of operating a vehicle system of a vehicle according to another example. The method 400 is executable, for example, by means of the vehicle system 110 according to some of the above examples.

The method 400 comprises determining, by means of the vehicle system, the presence of at least one bicycle which is accommodated in the bicycle rack of the vehicle, step 405. The presence of the at least one bicycle is determined based at least partially on one or more sensor signals received from one or more environment sensors of the vehicle and/or from a weight sensor of the vehicle, as described above. The method 400 further comprises determining a type of the at least one bicycle by means of the vehicle system, step 410, as described above.

When the presence of at least one bicycle and a type of the at least one bicycle in the bicycle rack have been determined, each of various functions of the vehicle system is controllable by means of the vehicle system, as described above. This is indicated in Fig. 4 by the selection node 415 and outgoing paths. The selection for each of the paths from the selection node 415 is performed, for example, depending on a selection condition for each of the outgoing paths, as described below.

When at the selection node 415 it is determined that a selection condition of the recommendation functionality and/or of the checklist functionality is fulfilled, the method 400 proceeds to step 425. In this case, the selection condition includes, for example, that an intention of a user of the vehicle to make a bicycle trip has been determined. At step 425, the number of passengers in the vehicle and an age of each passenger is determined by means of the vehicle system. The vehicle system then controls the recommendation functionality and/or the checklist functionality in accordance with the determined number of passengers in the vehicle and the determined age of each passenger, step 430, as described above. The method then returns to the selection node 415.

When at the selection node 415 it is determined that the selection condition of a bike theft alert function of the vehicle system is fulfilled, the method 400 proceeds to step 435. In this case, the selection condition includes, for example, a determined absence of a user of the vehicle from the proximity of the vehicle. At step 435, the vehicle system monitors the presence of the at least one bicycle accommodated in the bicycle rack using the one or more environment sensors and/or the weight sensor. When the monitoring indicates a change of the presence of the at least one bicycle, the vehicle system outputs an alert signal indicative of the change, step 440. The method 400 then returns to the selection node 415.

When at the selection node 415 it is determined that the selection condition of the status response function is fulfilled, the method 400 proceeds to step 445. In this case, the selection condition includes, for example, a coupling of the communication unit of the vehicle system to a communication network. At step 445, the vehicle system receives via the communication unit a status request. In response to receiving the status request the vehicle system obtains from the one or more environment sensors and/or from the weight sensor one or more sensor signals indicative of an accommodation status of the bicycle rack, step 450. The vehicle system than outputs via the communication unit a status response message indicative of the accommodation status of the bicycle rack. The method 400 then returns to the selection node 415.

The selection of one or more of the above-described operations at the selection node 415 can be performed successively or simultaneously in some examples of the method 400, depending on fulfillment of the respective selection condition(s).

## Claims

1. Method (200; 400) of operating a vehicle system (110) of a vehicle (100), the method comprising:
determining (210; 405), by means of the vehicle system (110), the presence of at least one bicycle (F1, F2) accommodated in or on a bicycle rack (160) of the vehicle (100), wherein the presence of the at least one bicycle (F1, F2) is determined based at least partially on one or more sensor signals received from one or more environment sensors (130) of the vehicle (100) and/or from a weight sensor of the vehicle (100), and
controlling (210; 430, 440, 450, 455), by means of the vehicle system (110) and based at least partially on the determined presence of the at least one bicycle (F1, F2), at least one function (140) of the vehicle (100);
wherein the method further comprises:
determining (410), by means of the vehicle system (110), a type of the at least one bicycle (F1, F2), wherein controlling (430, 440, 450, 455) the at least one function (140) is further performed based on the determined type of the at least one bicycle (F1, F2), wherein:
the one or more sensor signals comprise one or more camera signals received from a camera of the vehicle (100), and determining the type of the at least one bicycle (F1, F2) is performed at least partially using an object recognition algorithm which is applied to image data contained in the one or more camera signals, and/or
the one or more sensor signals comprise one or more weight sensor signals received from a weight sensor of the vehicle (100), and determining the type of the at least one bicycle (F1, F2) is performed at least partially based on a stored mapping between a plurality of bicycle types and a plurality of weight ranges,
monitoring (435), by means of the vehicle system (110), the presence of the at least one bicycle (F1, F2) accommodated in the bicycle rack (160) using the one or more environment sensors (130) and/or the weight sensor, wherein controlling (220; 440) the at least one function (140) comprises, when the monitoring (435) indicates a change of the presence of the at least one bicycle (F1, F2) while an alert condition of the vehicle system (110) is fulfilled, outputting (440), by means of the vehicle system (110), at least one alert signal indicative of the change.

2. Method according to claim 1, wherein the one or more environment sensors (130) comprise a camera, in particular a rearward camera, and/or a park assist sensor.

3. Method according to claim1 or claim 2, wherein the type of the at least one bicycle (F1, F2) is determined from a group of bicycle types including at least one of competition racing bike, racing bike, mountain bike, conventional bike, trekking bike, electric bike, children's walking bike and/or children's bike.

4. Method according to any one of the preceding claims, wherein, when the method comprises determining (410) a type of the at least one bicycle, controlling (220; 430, 440, 450, 455) the at least one function (140) comprises providing (430) a recommendation functionality and/or a checklist functionality to a user (D, P) of the vehicle system (110) via a user interface.

5. Method according to claim 4, wherein the recommendation functionality includes a recommendation for at least one bike route in accordance with the determined type of the at least one bicycle (F1, F2), and/or wherein the checklist functionality includes a checklist for at least one requirement depending at least on the determined type of the at least one bicycle (F1, F2).

6. Method according to any one of the preceding claims, further comprising, when the method comprises determining (410) a type of the at least one bicycle:
determining (425), by means of the vehicle system (110), a number of passengers (D, P) in the vehicle (100) and determining (425), by applying an image analysis algorithm to camera data obtained via one or more cameras capturing an interior of the vehicle (100), an age of each passenger (D, P),
wherein controlling (220; 430) the at least one function (140) is further performed based on the determined number of passengers (D, P) in the vehicle (100) and the determined age of each passenger (D, P).

7. Method of claim 6 in combination with claim 5, wherein the at least one bike route is determined based at least partially on one or more of the following:
a determined match between the determined number of passengers (D, P) in the vehicle (100) and a determined number of bicycles (F1, F2) accommodated in the bicycle rack (160);
a determined match between the determined age of each passenger (D, P) and the determined type of each bicycle (F1, F2) accommodated in the bicycle rack (160);
a location on a vehicle route, in particular a destination of a vehicle route, which has been pre-set in a navigation functionality of the vehicle system (110).

8. Method according to any one of the preceding claims, wherein, when the method comprises monitoring (435) the presence of the at least one bicycle (F1, F2) accommodated in the bicycle rack (160), the alert condition comprises a determined absence of a vehicle key of the vehicle (100) from a proximity of the vehicle (100).

9. Method according to any one of the preceding claims, further comprising:
receiving (445), by means of the vehicle system (110) and via a communication unit (150) of the vehicle system (110), a status request,
wherein controlling (220; 450, 455) the at least one function (140) comprises, in response to receiving the status request:
obtaining (450), by means of the vehicle system (110) and from the one or more environment sensors (130) and/or from the weight sensor, one or more sensor signals indicative of an accommodation status of the bicycle rack (160), and
outputting (455), by means of the vehicle system (110) and via the communication unit (150), at least one status response indicative of the accommodation status of the bicycle rack (160).

10. Computer program product comprising portions of program code which, when executed by a processor (122; 310) of a vehicle system (110), configure the vehicle system (110) to perform the method according to any one of the preceding claims.

11. Vehicle system (110) comprising a processor (122; 310) and a storage device (124; 320) operatively coupled to the processor (122; 310), wherein the storage device (124; 320) comprises portions of program code which, when executed by the processor (122; 310), cause the vehicle system (110) to perform the method according to any one of claims 1 to 9.

12. Vehicle (100) comprising a vehicle system according to claim 11.

## Patentansprüche

1. Verfahren (200; 400) zum Betreiben eines Fahrzeugsystems (110) eines Fahrzeugs (100), wobei das Verfahren Folgendes umfasst:
Bestimmen (210; 405), mittels des Fahrzeugsystems (110), der Anwesenheit mindestens eines Fahrrads (F1, F2), das in oder an einem Fahrradträger (160) des Fahrzeugs (100) untergebracht ist, wobei die Anwesenheit des mindestens einen Fahrrads (F1, F2) basierend mindestens teilweise auf einem oder mehreren Sensorsignalen bestimmt wird, die von einem oder mehreren Umgebungssensoren (130) des Fahrzeugs (100) und/oder von einem Gewichtssensor des Fahrzeugs (100) empfangen werden, und
Steuern (210; 430, 440, 450, 455) mindestens einer Funktion (140) des Fahrzeugs (100) mittels des Fahrzeugsystems (110) und basierend mindestens teilweise auf der bestimmten Anwesenheit des mindestens einen Fahrrads (F1, F2);
wobei das Verfahren ferner Folgendes umfasst:
Bestimmen (410) eines Typs des mindestens einen Fahrrads (F1, F2) mittels des Fahrzeugsystems (110), wobei das Steuern (430, 440, 450, 455) der mindestens einen Funktion (140) ferner basierend auf dem bestimmten Typ des mindestens einen Fahrrads (F1, F2) durchgeführt wird, wobei:
das eine oder die mehreren Sensorsignale ein oder mehrere von einer Kamera des Fahrzeugs (100) empfangene Kamerasignale umfassen, und das Bestimmen des Typs des mindestens einen Fahrrads (F1, F2) zumindest teilweise unter Verwendung eines Objekterkennungsalgorithmus durchgeführt wird, der auf in dem einen oder den mehreren Kamerasignalen enthaltene Bilddaten angewendet wird, und/oder
das eine oder die mehreren Sensorsignale ein oder mehrere Gewichtssensorsignale umfassen, die von einem Gewichtssensor des Fahrzeugs (100) empfangen werden, und das Bestimmen des Typs des mindestens einen Fahrrads (F1, F2) mindestens teilweise basierend auf einer gespeicherten Zuordnung zwischen einer Vielzahl von Fahrradtypen und einer Vielzahl von Gewichtsbereichen durchgeführt wird,
Überwachen (435), mittels des Fahrzeugsystems (110), der Anwesenheit des mindestens einen Fahrrads (F1, F2), das in dem Fahrradträger (160) untergebracht ist, unter Verwendung des einen oder der mehreren Umgebungssensoren (130) und/oder des Gewichtssensors, wobei das Steuern (220; 440) der mindestens einen Funktion (140), wenn das Überwachen (435) eine Änderung der Anwesenheit des mindestens einen Fahrrads (F1, F2) anzeigt, während eine Alarmbedingung des Fahrzeugsystems (110) erfüllt ist, das Ausgeben (440), mittels des Fahrzeugsystems (110), mindestens eines Alarmsignals, das die Änderung anzeigt, umfasst.

2. Verfahren nach Anspruch 1, wobei der eine oder die mehreren Umgebungssensoren (130) eine Kamera, insbesondere eine Rückfahrkamera, und/oder einen Parkassistenzsensor umfassen.

3. Verfahren nach Anspruch 1 oder Anspruch 2, wobei der Typ des mindestens einen Fahrrads (F1, F2) aus einer Gruppe von Fahrradtypen bestimmt wird, die mindestens eines von Wettkampf-Rennrad, Rennrad, Mountainbike, herkömmlichem Fahrrad, Trekkingrad, Elektrofahrrad, Kinderwanderrad und/oder Kinderfahrrad umfasst.

4. Verfahren nach einem der vorhergehenden Ansprüche, wobei, wenn das Verfahren das Bestimmen (410) eines Typs des mindestens einen Fahrrads umfasst, das Steuern (220; 430, 440, 450, 455) der mindestens einen Funktion (140) das Bereitstellen (430) einer Empfehlungsfunktionalität und/oder einer Checklistenfunktionalität für einen Benutzer (D, P) des Fahrzeugsystems (110) über eine Benutzerschnittstelle umfasst.

5. Verfahren nach Anspruch 4, wobei die Empfehlungsfunktionalität eine Empfehlung für mindestens eine Fahrradroute gemäß dem bestimmten Typ des mindestens einen Fahrrads (F1, F2) beinhaltet und/oder wobei die Checklistenfunktionalität eine Checkliste für mindestens eine Anforderung in Abhängigkeit von mindestens dem bestimmten Typ des mindestens einen Fahrrads (F1, F2) beinhaltet.

6. Verfahren nach einem der vorhergehenden Ansprüche, ferner umfassend, wenn das Verfahren das Bestimmen (410) eines Typs des mindestens einen Fahrrads umfasst:
Bestimmen (425), mittels des Fahrzeugsystems (110), einer Anzahl von Fahrgästen (D, P) in dem Fahrzeug (100) und Bestimmen (425), durch Anwenden eines Bildanalysealgorithmus auf Kameradaten, die über eine oder mehrere Kameras erhalten werden, die einen Innenraum des Fahrzeugs (100) erfassen, eines Alters jedes Fahrgasts (D, P),
wobei das Steuern (220; 430) der mindestens einen Funktion (140) ferner auf Grundlage der bestimmten Anzahl von Fahrgästen (D, P) in dem Fahrzeug (100) und des bestimmten Alters jedes Fahrgasts (D, P) durchgeführt wird.

7. Verfahren nach Anspruch 6 in Kombination mit Anspruch 5, wobei die mindestens eine Fahrradroute basierend mindestens teilweise auf einem oder mehreren der folgenden bestimmt wird:
einer bestimmten Übereinstimmung zwischen der bestimmten Anzahl von Fahrgästen (D, P) in dem Fahrzeug (100) und einer bestimmten Anzahl von Fahrrädern (F1, F2), die in dem Fahrradträger (160) untergebracht sind;
einer bestimmten Übereinstimmung zwischen dem bestimmten Alter jedes Fahrgasts (D, P) und dem bestimmten Typ jedes Fahrrads (F1, F2), das in dem Fahrradträger (160) untergebracht ist;
einem Ort auf einer Fahrzeugroute, insbesondere einem Ziel einer Fahrzeugroute, das in einer Navigationsfunktionalität des Fahrzeugsystems (110) voreingestellt wurde.

8. Verfahren nach einem der vorhergehenden Ansprüche, wobei, wenn das Verfahren das Überwachen (435) der Anwesenheit des mindestens einen Fahrrads (F1, F2), das in dem Fahrradträger (160) untergebracht ist, umfasst, die Alarmbedingung eine bestimmte Abwesenheit eines Fahrzeugschlüssels des Fahrzeugs (100) aus der Nähe des Fahrzeugs (100) umfasst.

9. Verfahren nach einem der vorhergehenden Ansprüche, ferner umfassend:
Empfangen (445) einer Statusabfrage mittels des Fahrzeugsystems (110) und über eine Kommunikationseinheit (150) des Fahrzeugsystems (110),
wobei das Steuern (220; 450, 455) der mindestens einen Funktion (140) als Reaktion auf das Empfangen der Statusabfrage Folgendes umfasst:
Erhalten (450), mittels des Fahrzeugsystems (110) und von dem einen oder den mehreren Umgebungssensoren (130) und/oder von dem Gewichtssensor, eines oder mehrerer Sensorsignale, die einen Unterbringungsstatus des Fahrradträgers (160) anzeigen, und
Ausgeben (455), mittels des Fahrzeugsystems (110) und über die Kommunikationseinheit (150), mindestens einer Statusantwort, die den Unterbringungsstatus des Fahrradträgers (160) anzeigt.

10. Computerprogrammprodukt, das Abschnitte von Programmcode umfasst, die, wenn sie von einem Prozessor (122; 310) eines Fahrzeugsystems (110) ausgeführt werden, das Fahrzeugsystem (110) so konfigurieren, dass es das Verfahren nach einem der vorhergehenden Ansprüche durchführt.

11. Fahrzeugsystem (110) mit einem Prozessor (122; 310) und einer Speichervorrichtung (124; 320), die betriebswirksam mit dem Prozessor (122; 310) gekoppelt ist, wobei die Speichervorrichtung (124; 320) Teile eines Programmcodes umfasst, die, wenn sie von dem Prozessor (122; 310) ausgeführt werden, das Fahrzeugsystem (110) veranlassen, das Verfahren nach einem der Ansprüche 1 bis 9 durchzuführen.

12. Fahrzeug (100), das ein Fahrzeugsystem nach Anspruch 11 umfasst.

## Revendications

1. Procédé (200 ; 400) de fonctionnement d'un système (110) de véhicule d'un véhicule (100), le procédé comprenant :
la détermination (210 ; 405), au moyen du système (110) de véhicule, de la présence d'au moins une bicyclette (F1, F2) logée dans ou sur un porte-vélos (160) du véhicule (100), la présence de ladite au moins une bicyclette (F1, F2) étant déterminée sur la base, au moins en partie, d'un ou de plusieurs signaux de capteurs reçus d'un ou de plusieurs capteurs d'environnement (130) du véhicule (100) et/ou d'un capteur de poids du véhicule (100), et
la commande (210 ; 430, 440, 450, 455), au moyen du système (110) de véhicule et sur la base, au moins en partie, de la présence déterminée de ladite au moins une bicyclette (F1, F2), d'au moins une fonction (140) du véhicule (100) ;
le procédé comprenant en outre :
la détermination (410), au moyen du système (110) de véhicule, d'un type de ladite au moins une bicyclette (F1, F2), la commande (430, 440, 450, 455) de la/des fonction(s) (140) étant en outre effectuée sur la base du type déterminé de ladite au moins une bicyclette (F1, F2), où :
l'un ou plusieurs signaux de capteur comprennent un ou plusieurs signaux de caméra reçus d'une caméra du véhicule (100), et la détermination du type de ladite au moins une bicyclette (F1, F2) est effectuée, au moins en partie, à l'aide d'un algorithme de reconnaissance d'objets étant appliqué aux données d'image contenues dans l'un ou plusieurs signaux de caméra, et/ou
l'un ou plusieurs signaux de capteur comprennent un ou plusieurs signaux de capteur de poids reçus d'un capteur de poids du véhicule (100), et la détermination du type de ladite au moins une bicyclette (F1, F2) est effectuée, au moins en partie, sur la base d'une mise en correspondance stockée entre une pluralité de types de bicyclettes et une pluralité de plages de poids,
la surveillance (435), au moyen du système (110) de véhicule, de la présence de ladite au moins une bicyclette (F1, F2) logée dans le porte-vélos (160) à l'aide d'un ou plusieurs capteurs d'environnement (130) et/ou du capteur de poids, la commande (220 ; 440) de la/des fonction(s) (140) comprenant, lorsque la surveillance (435) indique un changement de la présence de ladite au moins une bicyclette (F1, F2) alors qu'une condition d'alerte du système (110) de véhicule est remplie, l'émission (440), au moyen du système (110) de véhicule, d'au moins un signal d'alerte indicatif du changement.

2. Procédé selon la revendication 1, l'un ou plusieurs capteurs d'environnement (130) comprenant une caméra, en particulier une caméra orientée vers l'arrière, et/ou un capteur d'aide au stationnement.

3. Procédé selon la revendication 1 ou la revendication 2, le type de ladite au moins une bicyclette (F1, F2) est déterminé à partir d'un groupe de types de bicyclette comprenant au moins un vélo de compétition, un vélo de course, un VTT, un vélo conventionnel, un vélo de randonnée, un vélo électrique, un vélo d'apprentissage pour enfants et/ou un vélo pour enfants.

4. Procédé selon l'une quelconque des revendications précédentes, où, lorsque le procédé comprend la détermination (410) d'un type de l'au moins une bicyclette, la commande (220 ; 430, 440, 450, 455) de la/des fonction(s) (140) consiste à fournir (430) une fonctionnalité de recommandation et/ou une fonctionnalité de liste de contrôle à un utilisateur (D, P) du système (110) de véhicule via une interface utilisateur.

5. Procédé selon la revendication 4, la fonctionnalité de recommandation comprenant une recommandation pour au moins un itinéraire cyclable conformément au type déterminé de ladite au moins une bicyclette (F1, F2), et/ou la fonctionnalité de liste de contrôle comprenant une liste de contrôle pour au moins une exigence dépendant au moins du type déterminé de ladite au moins une bicyclette (F1, F2).

6. Procédé selon l'une quelconque des revendications précédentes, comprenant en outre, lorsque le procédé comprend la détermination (410) d'un type de l'au moins une bicyclette :
la détermination (425), au moyen du système (110) de véhicule, d'un nombre de passagers (D, P) dans le véhicule (100) et déterminer (425), en appliquant un algorithme d'analyse d'image aux données de caméra obtenues via une ou plusieurs caméras capturant l'intérieur du véhicule (100), l'âge de chaque passager (D, P),
la commande (220 ; 430) de la/des fonction(s) (140) étant en outre effectuée sur la base du nombre déterminé de passagers (D, P) dans le véhicule (100) et de l'âge déterminé de chaque passager (D, P).

7. Procédé selon la revendication 6 en combinaison avec la revendication 5, ledit au moins un itinéraire cyclable étant déterminé, au moins en partie, sur la base d'un ou plusieurs des éléments suivants :
une correspondance déterminée entre le nombre déterminé de passagers (D, P) dans le véhicule (100) et un nombre déterminé de bicyclettes (F1, F2) logées dans le porte-vélos (160) ;
une correspondance déterminée entre l'âge déterminé de chaque passager (D, P) et le type déterminé de chaque bicyclette (F1, F2) logée dans le porte-vélos (160) ;
un emplacement sur un itinéraire de véhicule, en particulier une destination d'un itinéraire de véhicule, qui a été prédéfini dans une fonctionnalité de navigation du système (110) de véhicule.

8. Procédé selon l'une quelconque des revendications précédentes, où, lorsque le procédé comprend la surveillance (435) de la présence de ladite au moins une bicyclette (F1, F2) logée dans le porte-vélos (160), la condition d'alerte comprend l'absence déterminée d'une clé de véhicule du véhicule (100) à proximité du véhicule (100).

9. Procédé selon l'une quelconque des revendications précédentes, comprenant en outre :
la réception (445), au moyen du système (110) de véhicule et via une unité de communication (150) du système (110) de véhicule, d'une demande d'état,
la commande (220 ; 450, 455) de la/des fonction(s) (140) comprenant, en réponse à la réception de la demande d'état :
l'obtention (450), au moyen du système (110) de véhicule et à partir d'un ou plusieurs capteurs d'environnement (130) et/ou du capteur de poids, d'un ou plusieurs signaux de capteur indicatifs d'un état de logement du porte-vélos (160), et
l'émission (455), au moyen du système (110) de véhicule et via l'unité de communication (150), d'au moins une réponse d'état indicative de l'état de logement du porte-vélos (160).

10. Produit de programme informatique comprenant des parties de code de programme qui, lorsqu'elles sont exécutées par un processeur (122 ; 310) d'un système (110) de véhicule, configurent le système (110) de véhicule pour qu'il exécute le procédé selon l'une quelconque des revendications précédentes.

11. Système (110) de véhicule comprenant un processeur (122 ; 310) et un dispositif de stockage (124 ; 320) couplé de manière fonctionnelle au processeur (122 ; 310), le dispositif de stockage (124 ; 320) comprenant des parties de code de programme qui, lorsqu'elles sont exécutées par le processeur (122 ; 310), amènent le système (110) de véhicule à exécuter la procédé selon l'une quelconque des revendications 1 à 9.

12. Véhicule (100) comprenant un système de véhicule selon la revendication 11.
